# EUROPEAN PATENT SPECIFICATION

(11) **EP 2 683 573 B1**
(45) Date of publication and mention of the grant of the patent: **11.11.2020**
(21) Application number: 12710316.6
(22) Date of filing: 06.03.2012
(51) Int. Cl.: B60L 53/14, B60L 53/63, B60L 53/65, B60L 53/66

(54) **APPLIANCE AND METHOD FOR RECHARGING BATTERIES OF ELECTRIC VEHICLES OR THE LIKE**
APPARAT UND METHODE ZUM LADEN DER BATTERIE EINES ELEKTROFAHRZEUGES ODER ÄHNLICHEM.
APPAREIL ET PROCÉDÉ POUR RECHARGER DES BATTERIES DE VÉHICULES ÉLECTRIQUES OU ANALOGUES

(30) Priority: 09.03.2011 IT MO20110054
(43) Date of publication of application: 15.01.2014
(73) Proprietor: Meta System S.p.A., 42124 Reggio Emilia (IT)
(72) Inventor: SIMONAZZI, Giuseppe, I-42123 Reggio Emilia (IT); LASAGNI, Cesare, I-42123 Reggio Emilia (IT)
(74) Representative: Brunacci, Marco
(86) International application number: PCT/IB2012/000406
(87) International publication number: WO 2012/120353

(56) References cited:
- WO-A1-94/08381
- WO-A2-2005/008808
- US-A1- 2010 134 067

## Description

### Technical Field

The present invention relates to an appliance and method for recharging batteries of electric vehicles or the like.

### Background Art

It is known that electric vehicles run on rechargeable power batteries which can be of different types depending on the type of technology used and on required performances.

The batteries of electric vehicles do however have a limited autonomy and must be periodically recharged.

In this respect, the use of specific battery chargers is known and common, connected to the conventional power supply mains and usable, for example, directly by the users of the vehicles inside their homes.

In this case, the recharge time is mainly determined by the current transmittable by the supply mains connection.

The power normally available by connecting up to a conventional domestic power socket varies between 1.5 kW (in countries with a power voltage of 110V) and 3-6kW (in countries with power voltage of 240 V).

Generally speaking, the maximum power dispensable by a domestic supply mains is defined at the time of executing the contract with the utility company and, in the event of such maximum power supply value being exceeded, commonly provided is either the interruption of the power supply to the unit (e.g., by means of any specific limiting device fitted in the meter device) or the application of a higher tariff.

The use of a battery charger for electric vehicles furthermore requires all or a major part of the available power (generally between 2.5 and 3 kW) from the mains.

This therefore results in the use of a battery charger connected to the conventional domestic supply mains sometimes not being simple and, in any case, tied to the use of other electrical units (washing machine, dishwasher or the like) inside the home.

In fact, so as not to exceed the above maximum available power value, the recharge of the electric vehicle by means of the battery charger is normally done at night or, in any case, when other electrical units do not absorb power from the domestic supply main charging station for electric vehicle are known from US2010/0134067

### Description of the Invention

The main aim of the present invention is to provide an appliance and method for recharging batteries of electric vehicles or the like which can be connected to the conventional electric supply mains at any time, quite apart from whether or not there are other electric units connected to the mains.

Another object of the present invention is to provide an appliance and method for recharging batteries of electric vehicles or the like that allows overcoming the mentioned drawbacks of the state of the art in the ambit of a simple, rational, easy and effective to use as well as low cost solution.

The above mentioned objects are achieved by the appliance defined in claim 1.Preferred embodiments are defined in dependent claims 2 to 4

### Brief Description of the Drawings

Other characteristics and advantages of the present invention will become more evident from the description of a preferred, but not sole, embodiment of an appliance in which:

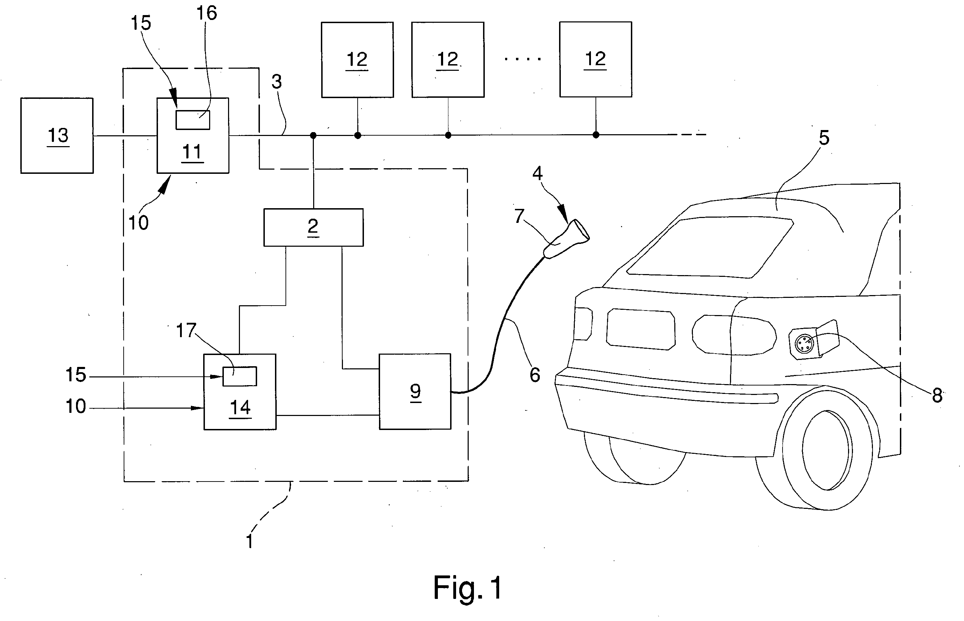

Figure 1 is a general functional diagram of the appliance according to the invention.

### Embodiments of the Invention

With particular reference to such illustrations, globally indicated by 1 is an appliance for recharging batteries of electric vehicles or the like.

Preferably, the appliance 1 is connectable to the conventional domestic electric supply mains and is usable, e.g., directly by the users of electric vehicles inside their own homes.

Connecting the appliance 1 to different supply mains or supply devices and its use in different ambits cannot however be ruled out.

The appliance 1 comprises first electric connection means 2 suitable for being connected to an electric supply mains, globally indicated by 3 in figure 1.

The first electric connection means 2 can be made up, e.g., of a suitable connector connectable to a conventional power socket of the supply mains 3. The appliance 1 also comprises second electric connection means 4 suitable for being connected to an electrically propelled vehicle 5.

The second electric connection means 4 can be made up, e.g., of a specific cable 6 and of a connector 7 of conventional type connectable to a complementary power socket 8 on the vehicle 5.

The appliance 1 comprises power supply means 9 connected to the first and to the second electric connection means 2 and 4 and suitable for converting the energy absorbed from the supply mains 3 into electricity dispensable to the vehicle 5.

In particular, the power supply means 9 can comprise an AC/DC converter device suitable for converting the alternate current dispensed by the power supply mains 3 into direct current usable for recharging the battery of the vehicle 5.

Advantageously, the appliance 1 comprises management and control means 10 associated with the supply mains 3 and with power supply means 9.

In particular, the management and control means 10 of the appliance 1 comprise a checking unit 11 suitable for checking the electricity available on the supply mains 3, determined according to the maximum electricity dispensable by the power mains itself and by the electricity absorbed by any electric units 12 connected to the supply mains itself.

Examples of electric units 12 connected to the domestic supply mains 3 can be: a dishwasher, a washing machine, an electric convector heater or the like.

It is pointed out that by the term "maximum dispensable power" is meant the maximum amount of power dispensable by a domestic supply mains (and therefore the maximum power absorbable by the various electric units 12 present and operating inside a home) which is generally speaking defined at the time of executing the contract between a user and a utility company.

Commonly speaking, in the case of such maximum power value being exceeded, the interruption is provided of the power supply to the unit (e.g., by means of any specific limiting device fitted in the meter device) or the application of a higher tariff.

Preferably, the electricity available on the supply mains 3 in a determinate moment is equal to the difference between the maximum electricity dispensable by the supply mains itself and the electricity absorbed by the other electric units 12.

Usefully, the checking unit 11 is made up of a central unit associated with a meter device 13, of the type e.g. of a conventional meter device used in private homes and suitable for measuring the electricity dispensed by the supply mains 3.

Advantageously, the appliance 1 comprises a regulation unit 14 suitable for regulating the power dispensed by the power supply means 9 to the vehicle 5 according to the above electricity available on the supply mains 3.

Preferably, the dispensed electricity is equal to the available electricity.

This way, the maximum power available on the supply mains 3 is usable for recharging the vehicle 5 by means of the appliance 1 without exceeding the maximum power dispensable by the supply mains itself.

This allows avoiding undesired interruptions of the supply of electricity or the application of higher tariffs for the energy supplied over and above such maximum dispensable power.

Usefully, the management and control means 10 comprise means for transmitting/receiving data between the checking unit 11 and the regulation unit 14, generally indicated in the illustration with the reference 15.

The checking unit 11 and the regulation unit 14 are in fact located preferably at different points inside the building (home, etc.).

The checking unit 11 is connected to the meter device 13 and is preferably located close to it.

The regulation unit 14 is suitable for controlling the power supply means 9 and preferably is located in the proximity of the vehicle 5.

Different embodiments of the appliance 1 cannot however be ruled out wherein both the checking unit 11 and the regulation unit 14 are made inside a single container.

With reference to the particular embodiment of the appliance 1 shown in figure 1, the checking unit 11 is associated with the regulation unit 14 through the first electric connection means 2 and the supply mains 3.

Always with reference to the particular embodiment shown in figure 1, the transmitting/receiving means 15 comprise a first transmitting/receiving device 16 on the checking unit 11, suitable for transmitting/receiving data to/from the regulation unit 14, by means of the so-called conveyed wave technology and directly on the supply mains 3.

The transmitting/receiving means 15 also comprise a second transmitting/receiving device 17 on the regulation unit 14, suitable for transmitting/receiving data to/from the checking unit 11, by means of the so-called conveyed wave technology and directly on the supply mains 3.

Different transmitting/receiving means 15 and the use of different technologies for transmitting/receiving data between the checking unit 11 and the regulation unit 14 cannot however be ruled out.

Alternatively, for example, the transmitting/receiving means 15 can comprise a first transmitting/receiving device on the checking unit 11, suitable for transmitting/receiving data to/from the regulation unit 14, by means of a so-called wireless technology (e.g., by radio frequency by means of Wi-Fi, Bluetooth or other communication standard).

In this case, the transmitting/receiving means 15 also comprise a second transmitting/receiving device on the regulation unit 14, suitable for transmitting/receiving data to/from the checking unit 11, by means of the so-called wireless technology (e.g., by radio frequency by means of Wi-Fi, Bluetooth or other communication standard).

A method for recharging batteries of electric vehicles is described here below. The method comprises a phase of checking the electricity available on the power supply mains.

In particular, such checking phase is performed by the checking unit 11 which determines the electricity available according to the maximum power dispensable by the supply mains 3 and according to the electricity absorbed by any electric units 12 connected to the supply mains.

The electricity absorbed by the other electric units 12 is detected directly by the meter device 13, to which the checking unit 11 is connected.

The method also comprises a phase of regulation of the electricity dispensed through the power supply means 9 and the second electric connection means 4 to an electrically-propelled vehicle 5.

In particular, this regulation phase is performed by the regulation unit 14 which determines the electricity dispensed to the vehicle 5 according to the electricity available on the supply mains 3.

Preferably, the electricity available on the supply mains 3 in a determinate moment is equal to the difference between the maximum electricity dispensable by the supply mains itself and the electricity absorbed by other electric units 12. Preferably, the dispensed electricity is equal to the available electricity.

This way, the maximum power available on the supply mains 3 is usable to recharge the vehicle 5 by means of the appliance 1 without exceeding the maximum power dispensable by the supply mains itself, during the entire period of use of the appliance 1 and quite apart from the number and type of any other electric units 12 connected to the supply mains 3.

It has in practice been ascertained how the described invention achieves the proposed objects.

In particular, the fact is underlined that the appliance according to the invention permit recharging batteries for electric vehicles or the like by means of the conventional supply mains at any time, quite apart from whether or not there are other electric units connected to the mains.

## Claims

1. Appliance (1) for recharging batteries of electric vehicles by means of a conventional domestic electric supply mains, comprising:
- first electric connection means (2) provided with a connector connected to a conventional power socket of a domestic electric supply mains (3);
- second electric connection means (4) provided with a cable (6) and a connector (7) connected to a complementary power socket (8) of an electric vehicle (5);
- power supply means (9) associated with said first and second electric connection means (2, 4) and configured for converting the electric energy absorbed from said domestic electric supply mains (3) into electric energy deliverable to said electric vehicle (5);
- management and control means (10) associated with said supply mains (3) and with said power supply means (9);
- wherein said management and control means (10) comprise a checking unit (11) configured for checking the available electric power on said domestic electric supply mains (3), determined according to the maximum electric power deliverable from said supply mains (3) and to the electric power absorbed by possible electric units (12) connected to said supply mains (3), wherein said available electric power is equal to the difference between said maximum deliverable electric power and said absorbed electric power;
- wherein said checking unit (11) is associated with a meter device (13) of the type of a conventional meter device used in private homes and suitable for measuring the electricity dispensed by said domestic electric supply mains (3);
- a regulation unit (14) configured for regulating the electric power delivered by said power supply means (9) to said vehicle (5) according to said available electric power on the domestic electric supply mains (3), wherein said electric power delivered is equal to said available electric power.;
- wherein said checking unit (11) is located near said meter device (13) and said regulation unit (14) is located in the proximity of said vehicle (5), and
- wherein said management and control means (10) comprise transmitting/receiving means (15) suitable for transmitting/receiving data between said checking unit (11) and said regulation unit (14).

2. Appliance (1) according to claim 1, **characterised by** the fact that said checking unit (11) is associated with said regulation unit (14) through said supply mains (3).

3. Appliance (1) according to claim 2, **characterised by** the fact that said transmitting/receiving means (15) comprise at least a conveyed wave transmitting/receiving device (16, 17) through said supply mains (3).

4. Appliance (1) according to the claim 1, **characterised by** the fact that said transmitting/receiving means (15) comprise at least a wireless transmitting/receiving device.

## Patentansprüche

1. Vorrichtung (1) zum Aufladen von Batterien von Elektrofahrzeugen über ein konventionelles elektrisches Hausversorgungsnetz, umfassend:
- erste elektrische Verbindungsmittel (2), die mit einem Stecker versehen sind, der mit einer herkömmlichen Steckdose eines elektrischen Hausversorgungsnetzes (3) verbunden ist;
- zweite elektrische Verbindungsmittel (4), die mit einem Kabel (6) und einem Stecker (7) versehen sind, der mit einer komplementären Steckdose (8) eines Elektrofahrzeugs (5) verbunden ist;
- Stromversorgungsmittel (9), die den ersten und zweiten elektrischen Verbindungsmitteln (2, 4) zugeordnet und so konfiguriert sind, dass sie die von dem elektrischen Hausversorgungsnetz (3) aufgenommene elektrische Energie in elektrische Energie umwandelt, die an das Elektrofahrzeug (5) abgegeben werden kann;
- Verwaltungs- und Steuermittel (10), die dem Versorgungsnetz (3) und den Stromversorgungsmitteln (9) zugeordnet sind;
- wobei die Verwaltungs- und Steuermittel (10) eine Prüfeinheit (11) umfassen, die so konfiguriert ist, dass sie die verfügbare elektrische Leistung auf dem elektrischen Hausversorgungsnetz (3) prüft, die in Abhängigkeit von der maximalen elektrischen Leistung, die von dem Versorgungsnetz (3) geliefert werden kann, und von der elektrischen Leistung, die von möglichen elektrischen Einheiten (12) aufgenommen wird, die mit dem Versorgungsnetz (3) verbunden sind, bestimmt wird, wobei die verfügbare elektrische Leistung gleich der Differenz zwischen der maximal lieferbaren elektrischen Leistung und der aufgenommenen elektrischen Leistung ist;
- wobei die Prüfeinheit (11) mit einer Zählervorrichtung (13) des Typs einer konventionellen Zählervorrichtung zugeordnet ist, die in Privathaushalten verwendet wird und geeignet ist, die von dem elektrischen Hausversorgungsnetz (3) abgegebene Elektrizität zu messen;
- eine Regeleinheit (14), die so konfiguriert ist, dass sie die von den Stromversorgungsmitteln (9) an das Fahrzeug (5) gelieferte elektrische Leistung in Abhängigkeit von der verfügbaren elektrischen Leistung auf dem elektrischen Hausversorgungsnetz (3) regelt, wobei die gelieferte elektrische Leistung gleich der verfügbaren elektrischen Leistung ist;
- wobei die Prüfeinheit (11) in der Nähe der Zählervorrichtung (13) und die Regeleinheit (14) in der Nähe des Fahrzeugs (5) angeordnet ist, und
- wobei die Verwaltungs- und Steuermittel (10) Sende-/Empfangsmittel (15) umfassen, die zum Senden/Empfangen von Daten zwischen der Prüfeinheit (11) und der Regeleinheit (14) geeignet sind.

2. Vorrichtung (1) nach Anspruch 1, **dadurch gekennzeichnet, dass** die Prüfeinheit (11) über das Versorgungsnetz (3) der Regeleinheit (14) zugeordnet ist.

3. Vorrichtung (1) nach Anspruch 2, **dadurch gekennzeichnet, dass** die Sende-/ Empfangsmittel (15) mindestens eine Sende-/Empfangsvorrichtung (16, 17) für übertragene Wellen über das Versorgungsnetz (3) umfassen.

4. Vorrichtung (1) nach Anspruch 1, **dadurch gekennzeichnet, dass** die Sende-/ Empfangsmittel (15) mindestens eine drahtlose Sende-/Empfangsvorrichtung umfassen.

## Revendications

1. Appareil (1) permettant de recharger des batteries de véhicules électriques au moyen d'un réseau d'alimentation électrique domestique classique, comprenant :
- des premiers moyens de connexion électrique (2) pourvus d'un connecteur connecté à une prise de courant classique d'un réseau d'alimentation (3) électrique domestique ;
- des seconds moyens de connexion électrique (4) pourvus d'un câble (6) et d'un connecteur (7) connecté à une prise de courant complémentaire (8) d'un véhicule électrique (5) ;
- des moyens d'alimentation électrique (9) associés auxdits premiers et seconds moyens de connexion électrique (2, 4) et configurés pour convertir l'énergie électrique absorbée à partir dudit réseau d'alimentation (3) électrique domestique en énergie électrique pouvant être fournie audit véhicule électrique (5) ;
- des moyens de gestion et de commande (10) associés audit réseau d'alimentation (3) et auxdits moyens d'alimentation électrique (9) ;
- dans lequel lesdits moyens de gestion et de commande (10) comprennent une unité de vérification (11) configurée pour vérifier la puissance électrique disponible sur ledit réseau d'alimentation (3) électrique domestique, déterminée selon la puissance électrique maximale pouvant être fournie à partir dudit réseau d'alimentation (3) et la puissance électrique absorbée par des unités électriques (12) possibles connectées audit réseau d'alimentation (3), dans lequel ladite puissance électrique disponible est égale à la différence entre ladite puissance électrique maximale pouvant être fournie et ladite puissance électrique absorbée ;
- dans lequel ladite unité de vérification (11) est associée à un dispositif compteur (13) du type d'un dispositif compteur classique utilisé dans des maisons particulières et adaptées pour mesurer l'électricité distribuée par ledit réseau d'alimentation (3) électrique domestique ;
- une unité de régulation (14) configurée pour réguler la puissance électrique fournie par lesdits moyens d'alimentation électrique (9) audit véhicule (5) en fonction de ladite puissance électrique disponible sur le réseau d'alimentation (3) électriques domestiques, dans lequel ladite puissance électrique fournie est égale à ladite puissance électrique disponible ;
- dans lequel ladite unité de vérification (11) est située près dudit dispositif compteur (13) et ladite unité de régulation (14) est située à proximité dudit véhicule (5), et
- dans lequel lesdits moyens de gestion et de commande (10) comprennent des moyens d'émission/réception (15) adaptés pour émettre/recevoir des données entre ladite unité de vérification (11) et ladite unité de régulation (14).

2. Appareil (1) selon la revendication 1, **caractérisé par le fait que** ladite unité de vérification (11) est associée à ladite unité de régulation (14) par l'intermédiaire dudit réseau d'alimentation (3).

3. Appareil (1) selon la revendication 2, **caractérisé par le fait que** lesdits moyens d'émission/réception (15) comprennent au moins un dispositif d'émission/réception d'ondes transmises (16, 17) par l'intermédiaire dudit réseau d'alimentation (3).

4. Appareil (1) selon la revendication 1, **caractérisé par le fait que** lesdits moyens d'émission/réception (15) comprennent au moins un dispositif d'émission/réception sans fil.
